# EUROPÄISCHE PATENTANMELDUNG

(11) **EP 3 315 018 A1**
(43) Veröffentlichungstag der Anmeldung: **02.05.2018**
(21) Anmeldenummer: 16195592.7
(22) Anmeldetag: 25.10.2016
(51) Int. Cl.: A01G 1/08

(54) **BLECHFORMTEIL, VERWENDUNG DES BLECHFORMTEILS, RASENKANTENSET UND VERFAHREN ZUM SETZEN VON RASENKANTEN**

(71) Anmelder: reinkedesign.GmbH, 90763 Fürth (DE)
(72) Erfinder: REINKE, Waldemar, 90768 Fürth (DE)
(74) Vertreter: Dr. Gassner & Partner mbB

(57) **Zusammenfassung**

Die Erfindung betrifft ein Blechformteil zur Verwendung als Rasenkante oder Beetbegrenzung, wobei das Blechformteil zumindest eine erste Faltkante (F1) aufweist und einstückig aus einem Blechzuschnitt hergestellt ist, wobei die erste Faltkante (F1) zwischen einem ersten (1) und einem zweiten Abschnitt (2) angeordnet und der erste Abschnitt (1) an der ersten Faltkante (F1) abgekantet ist,
wobei im ersten Abschnitt (1) der ersten Faltkante (F1) gegenüberliegend eine Unterkante (U) angeordnet und zumindest eine erste Zunge (Z1) vorgesehen ist, wobei die erste Zunge (Z1) an einer zweiten Faltkante (F2) aus dem ersten Abschnitt (1) herausgebogen werden kann und im herausgebogenen Zustand einen Vorsprung bildet,
wobei die zweite Faltkante (F2) parallel zur ersten Faltkante (F1) und beabstandet zur Unterkante (U) verläuft.

## Beschreibung

Die Erfindung betrifft ein einstückig aus einem Blechzuschnitt hergestelltes Blechformteil zur Verwendung als Rasenkante oder Beetbegrenzung. Die Erfindung betrifft weiterhin die Verwendung des Blechformteils, ein Rasenkantenset und ein Verfahren zum Setzen von Rasenkanten.

Blechformteile zur Verwendung als Rasenkanten sind aus dem deutschen Gebrauchsmuster DE 20 2012 011 118 bekannt. Die Rasenkanten weisen jeweils im oberen Bereich eine Biegekante auf und bestehen jeweils aus einem langen Blechstreifen mit einer wellenförmiger Versteifung der Unterkante.

Beim Einsetzen bekannter Rasenkanten ins Erdreich besteht die Schwierigkeit darin, alle Rasenkanten so einzusetzen, dass sie direkt aneinander anschließen und sich ein gleichmäßiges Erscheinungsbild ergibt.

Weiterhin sind Rasenkanten bekannt, welche an ihrer Unterkante einen im rechten Winkel abgekanteten Bereich oder im rechten Winkel abgekantete Zungen aufweisen, so dass sie auf dem abgekanteten Bereich oder den Zungen stehen können. Bei dieser Rasenkante fällt die Kante, an welcher der Bereich und die Zungen abgekantet sind, mit der Unterkante der Rasenkante zusammen. Zum Einsetzen dieser Rasenkanten muss ein Graben ausgehoben werden, der so breit ist, dass die Rasenkanten mit dem abgekanteten Bereich oder den abgekanteten Zungen auf den Boden dieses Grabens gestellt werden können. Anschließend wird der Graben mit den eingesetzten Rasenkanten wieder verschlossen. Nachteilig bei diesem System ist, dass der Boden des Grabens vollkommen parallel zur Bodenoberfläche sein muss, um eine parallel zur Bodenoberfläche verlaufende Oberkante der Rasenkanten zu erreichen. Nachteilig ist dabei weiterhin, dass verhältnismäßig viel Erdreich ausgehoben werden muss, um die Rasenkanten zu setzen.

Die Aufgabe der vorliegenden Erfindung ist es, ein als Rasenkante oder Beeteinfassung geeignetes Blechformteil anzugeben, welches einfach und kostengünstig herstellbar und ins Erdreich einsetzbar ist und es gleichzeitig erleichtert, mehrere der Blechformteile so als Rasenkanten ins Erdreich einzusetzen, dass sie direkt aneinander anschließen und sich ein gleichmäßiges Erscheinungsbild ergibt. Weiterhin sollen eine Verwendung eines solchen Blechformteils, ein das Blechformteil enthaltendes Set und ein Verfahren zum Setzen von Rasenkanten angegeben werden.

Die Aufgabe der Erfindung wird durch die Merkmale der Patentansprüche 1, 8, 10, 11, 12 und 14 gelöst. Zweckmäßige Ausgestaltungen ergeben sich aus den Merkmalen der abhängigen Patentansprüche.

Gemäß der Erfindung wird ein Blechformteil zur Verwendung als Rasenkante oder Beetbegrenzung angegeben, wobei das Blechformteil zumindest eine erste Faltkante aufweist und einstückig aus einem Blechzuschnitt hergestellt ist, wobei die erste Faltkante zwischen einem ersten und einem zweiten Abschnitt angeordnet und der erste Abschnitt an der ersten Faltkante abgekantet ist.

Im ersten Abschnitt ist der ersten Faltkante gegenüberliegend eine Unterkante angeordnet und es ist zumindest eine erste Zunge vorgesehen, wobei die erste Zunge an einer zweiten Faltkante aus dem ersten Abschnitt herausgebogen werden kann und im herausgebogenen Zustand einen Vorsprung bildet,

wobei die zweite Faltkante parallel zur ersten Faltkante und beabstandet zur Unterkante verläuft.

Das erfindungsgemäße Blechformteil lässt sich in einfacher Weise aus einem Blech z. B. mittels Laserschneiden oder mittels Stanzen und nachfolgendem Biegen entlang der Faltkanten herstellen.

Unter einer "Zunge" wird ebenso wie unter einer "Lasche" erfindungsgemäß ein Blechabschnitt verstanden, der auf einer Seite fixiert ist und auf der gegenüberliegenden Seite frei beweglich ist. Die fixierte Seite ist bei der ersten Zunge die zweite Faltkante.

Die erste Zunge kann sowohl nach "innen", d. h. bei bestimmungsgemäßer Verwendung als Rasenkante unter den zweiten Abschnitt, oder nach "außen" gebogen sein.

Unter der Unterkante kann eine Außenkante des ersten Abschnitts verstanden werden, welche der ersten Faltkante gegenüberliegt. Es ist im Allgemeinen diejenige Außenkante, welche auf ihrer gesamten Länge am weitesten von der ersten Faltkante entfernt ist. Üblicherweise ist zwischen der ersten Faltkante und der Unterkante, außer gegebenenfalls der zweiten Faltkante, keine dazwischenliegende weitere Faltkante vorhanden.

Die erste Faltkante kann einen ersten Kantenwinkel im Bereich von 10° bis 180°, insbesondere 45° bis 140°, insbesondere 70° bis 110°, insbesondere von 90° aufweisen. Bei einem Kantenwinkel von 180° ist der zweite Abschnitt an der ersten Faltkante vollständig auf den ersten Abschnitt zurückgefaltet. Bei einer solchen Ausgestaltung kann das Blechformteil zumindest eine senkrecht zur ersten Faltkante verlaufende weitere Faltkante aufweisen, an welcher ein das Blechformteil bildendes Material perforiert und/oder verjüngt ist. Dadurch kann das Blechformteil an der weiteren Faltkante manuell, d. h. ohne weitere technische Hilfsmittel gefaltet werden, um bei einer Verwendung als Rasenkante oder Beetbegrenzung leicht einen gewünschten Winkel oder eine gewünschte Ecke bilden zu können.

Unter einem "Kantenwinkel" wird der Winkel zwischen den Flächen verstanden, die angrenzend an die Faltkante angeordnet sind.

Die zweite Faltkante weist einen zweiten Kantenwinkel im Bereich von ±60° bis ±120°, insbesondere ±85° bis ±95°, insbesondere ±90° auf, wobei +90° senkrecht nach innen und -90° senkrecht nach außen aus dem ersten Abschnitt herausgebogen bedeutet.

Durch die herausgebogene erste Zunge wird eine Einstecktiefe des erfindungsgemäßen Blechformteils in das Erdreich begrenzt, so dass beim Einstecken mehrerer der erfindungsgemäßen Blechformteile sämtliche der Blechformteile die gleiche Einstecktiefe aufweisen. Durch die zur ersten Faltkante parallele zweite Faltkante wird erreicht, dass die erste Faltkante parallel zum Boden ausgerichtet ist, wenn die erste Zunge bündig auf dem Boden aufliegt. Bei einer Verwendung des Blechformteils in einer Hanglage kann es für ein bündiges Aufliegen erforderlich sein, einen von 90° abweichenden Kantenwinkel für die zweite Faltkante zu wählen. Erleichtert wird die parallele Ausrichtung der ersten Faltkante zum Boden, wenn das Blechformteil mindestens zwei erste Zungen aufweist, wobei die zweiten Faltkanten dann jeweils denselben Abstand zur ersten Faltkante aufweisen.

Bei einer Ausgestaltung sind daher im ersten Abschnitt eine Mehrzahl, insbesondere zwei, der ersten Zungen vorgesehen, welche jeweils an der zweiten Faltkante aus dem ersten Abschnitt herausgebogen werden können und im herausgebogenen Zustand jeweils einen Vorsprung bilden, wobei jede der zweiten Faltkanten parallel zur ersten Faltkante verläuft und denselben Abstand zur ersten Faltkante aufweist. Der Abstand der zweiten Faltkante zur ersten Faltkante kann höchstens 90%, insbesondere höchstens 80%, insbesondere höchstens 70%, insbesondere höchstens 60%, insbesondere höchstens 50%, des Abstands zwischen der ersten Faltkante und der Unterkante betragen. Die zweite Faltkante ist im Allgemeinen näher an der Unterkante als an der ersten Faltkante angeordnet. Die Unterkante und die zweite Faltkante können parallel verlaufen.

Es ist auch möglich, dass in dem Blechformteil zwei oder mehr erste Zungen vorgesehen sind, bei welchen die zweite Faltkante jeweils einen unterschiedlichen Abstand zur ersten Faltkante aufweist. Je nach gewünschter Einstecktiefe in das Erdreich kann/können dann diejenige(n) der ersten Zungen aus dem ersten Abschnitt herausgebogen werden, bei welcher/welchen ein Abstand von der zweiten Faltkante zur Unterkante des Blechformteils der gewünschten Einstecktiefe entspricht.

Bei einer weiteren Ausgestaltung umfasst das Blechformteil weiterhin einen dritten Abschnitt, welcher sich vom zweiten Abschnitt erstreckt, wobei eine dritte Faltkante zwischen dem zweiten und dem dritten Abschnitt angeordnet und der dritte Abschnitt an der dritten Faltkante abgekantet ist, wobei die zweite Faltkante und die dritte Faltkante parallel verlaufen. Bei dieser Ausgestaltung beträgt der Kantenwinkel üblicherweise weniger als 180°. Bei einem Kantenwinkel von 180° ist üblicherweise kein dritter Abschnitt vorhanden.

Die Kantenwinkel an der ersten und dritten Faltkante sind insbesondere so gewählt, dass das Blechformteil einen U-förmigen Querschnitt mit einem kurzen und einem langen Schenkel aufweist.

Bei einer weiteren Ausgestaltung weist der erste Abschnitt eine erste und eine gegenüberliegende zweite Außenkante und der zweite Abschnitt eine dritte und eine gegenüberliegende vierte Außenkante auf, wobei das Blechformteil im Bereich der ersten, zweiten, dritten und/oder vierten Außenkante zur Aufnahme zumindest eines Verbindungsmittels oder als zumindest ein Verbindungsmittel oder Teil eines Verbindungsmittels ausgebildet ist, wobei das Verbindungsmittel ein zum Verbinden mit einem weiteren Blechformteil ausgebildetes Verbindungsmittel ist. Das weitere Blechformteil weist insbesondere die erfindungsgemäßen Merkmale auf. Das Verbindungsmittel kann ein beliebiges Verbindungsmittel, wie beispielsweise eine Schraube oder eine Niete oder sogar eine Schweißverbindung sein. Das Blechformteil kann zur Aufnahme eines solchen Verbindungsmittels durch das Vorsehen eines Durchbruchs ausgebildet sein. Bei einer Schraube oder Niete als Verbindungsmittel kann dann das weitere Blechformteil zur Verbindung mittels dem Verbindungsmittel einen zum Durchbruch des Blechformteils korrespondierenden weiteren Durchbruch aufweisen, so dass das Verbindungsmittel durch beide Durchbrüche hindurch zur Verbindung eingesetzt werden kann.

Bei einer Schweißverbindung als Verbindungsmittel kann das Blechformteil ebenfalls einen Durchbruch aufweisen. Bei einer Überlappung mit einem weiteren Blechformteil kann dann durch den Durchbruch hindurch ein das weitere Blechformteil mit dem Blechformteil verbindender Schweißpunkt auf das weitere Blechformteil gesetzt werden. Das Verbindungsmittel oder der Teil des Verbindungsmittels kann jedoch auch aus dem Blechformteil gebildet sein, beispielsweise indem aus dem Blechformteil eine Lasche zum Eingreifen in einen Durchbruch eines weiteren Blechformteils gebildet ist oder indem das Blechformteil einen Durchbruch zur Aufnahme einer Lasche eines weiteren Blechformteils aufweist. Die Lasche und der Durchbruch können dabei jeweils als Verbindungsmittel oder als Teil eines zusammenwirkenden Verbindungsmittels aufgefasst werden.

Unter dem Bereich einer Kante wird insbesondere der Teil eines jeweiligen Abschnitts verstanden, in welchem jeder Punkt einen minimalen Abstand zur jeweiligen Kante aufweist, welcher maximal 30%, insbesondere maximal 25%, insbesondere maximal 20%, insbesondere maximal 15%, insbesondere maximal 10%, insbesondere maximal 5%, des kürzesten Abstands zwischen der Kante und der der Kante gegenüberliegenden weiteren Kante des jeweiligen Abschnitts beträgt. Bei der Kante und der weiteren Kante kann es sich jeweils um die Außenkante des Abschnitts handeln.

Das Verbindungsmittel kann weiterhin mindestens ein Verbindungsmittel oder eine Kombination von Verbindungsmitteln aus der folgenden Gruppe sein:
i) eine im Bereich der ersten, zweiten, dritten und/oder vierten Außenkante angeordnete zweite, dritte, vierten und/oder fünfte Zunge zum Überlappen mit einem Bereich einer ersten, zweiten, dritten und/oder vierten Außenkante eines weiteren Blechformteils gemäß diesem oder einem der vorhergehenden Ansprüche,
ii) mindestens ein erster Durchbruch, welcher in der zweiten und/oder dritten Zunge oder im ersten Abschnitt im Bereich der ersten und/oder zweiten Außenkante angeordnet ist, zum Einstecken einer ersten Lasche eines weiteren erfindungsgemäßen Blechformteils und,
iii) mindestens eine erste Lasche, welche auf der zweiten und/oder dritten Zunge oder im ersten Abschnitt im Bereich der ersten und/oder zweiten Außenkante angeordnet ist, zum Einstecken in den ersten Durchbruch eines weiteren erfindungsgemäßen Blechformteils.

Beim Einstecken einer der Laschen in einen der Durchbrüche wird die Lasche durch den Durchbruch hindurch in den den Durchbruch aufweisenden Abschnitt oder die den Durchbruch aufweisende Zunge hineingesteckt.

Es ist zweckmäßigerweise eine gleiche Anzahl von ersten Laschen und ersten Durchbrüchen vorgesehen. Insbesondere sind eine bis zehn, insbesondere zwei bis vier erste Laschen und erste Durchbrüche vorgesehenen. Bei einer Ausgestaltung sind ausschließlich auf einer zweiten Zunge erste Laschen und im ersten Abschnitt im Bereich der zweiten Außenkante erste Durchbrüche vorgesehen. Bei einer alternativen Ausgestaltung können auch auf der vierten und/oder fünften Zunge zweite Durchbrüche und/oder zweite Laschen vorgesehen sein. Das Vorsehen sechster und siebter Zungen an Außenkanten des dritten Abschnitts ist möglich. Die Verbindungsmittel können mit Rastmitteln versehen sein. Bei dem Rastmittel kann es sich beispielsweise um eine Ausstülpung der ersten oder zweiten Lasche zum Einrasten in eine entsprechende Vertiefung oder einen entsprechenden weiteren Durchbruch im weiteren erfindungsgemäßen Blechformteil handeln.

Bei einer weiteren Ausgestaltung ist die zweite, dritte, vierte und/oder fünfte Zunge durch einen Doppelfalz um eine Blechstärke, insbesondere nach innen, versetzt abgekantet, so dass ein weiteres Blechformteil mit gleichem Querschnitt und gleicher Blechstärke formschlüssig damit verbunden werden kann.

Unter einem "Doppelfalz" werden zwei benachbarte Faltkanten verstanden, an denen das Blech um einen vorgegebenen Faltkantenwinkel in eine Richtung und bei der benachbarten Faltkante um denselben Faltkantenwinkel in die entgegengesetzte Richtung gebogen wird, so dass sich das Blech mit einem Versatz parallel zu dessen ursprünglicher Erstreckung weiter in die ursprüngliche Richtung erstreckt.

Ein formschlüssiges Verbinden erhöht die Stabilität der zusammengesetzten Rasenkanten. Bei der formschlüssigen Verbindung bilden die zweiten Abschnitte benachbarter Blechformteile eine ebene Fläche. Die glatt durchgehende gemeinsame Oberfläche der formschlüssig verbundenen Rasenkanten hat den Vorteil, die Gefahr einer Verletzung zu verringern, keinen Ansatz zum Ansammeln von Schmutz zu bilden und leichter zu reinigen zu sein. Die ebene Fläche kann eine horizontale Fläche oder eine geneigte Fläche mit gleichmäßiger Neigung sein.

In einer Ausgestaltung weist der Blechzuschnitt entlang der ersten, zweiten und/oder dritten Faltkante eine Materialverjüngung und/oder Perforation auf. Eine Materialverjüngung und/oder Perforation erleichtert das Falten entlang der Faltkante. Insbesondere die zweite Faltkante kann so auch ohne technische Vorrichtungen mit dem erwünschten Kantenwinkel gefaltet werden.

Die Erfindung betrifft weiterhin eine Verwendung einer Mehrzahl der erfindungsgemäßen Blechformteile als Rasenkante oder Beetbegrenzung, wobei die Blechformteile mit einem Teil der ersten Abschnitte in ein Erdreich gesteckt werden, und die durch die ersten Zungen gebildeten Vorsprünge eine Eindringtiefe in das Erdreich begrenzen. Die ersten Zungen liegen bei der angegebenen Verwendung im wesentlichen Flach auf dem Erdreich auf.

Die Blechformteile können insbesondere zu einer längeren Rasenkante zusammengesetzt werden, indem sie über die Verbindungsmittel miteinander verbunden werden.

Weiterhin betrifft die Erfindung ein Rasenkantenset, umfassend zumindest zwei erfindungsgemäße Blechformteile, wobei jedes der Blechformteile im Bereich der dritten Außenkante eine vierte Zunge aufweist, welche durch einen Doppelfalz um eine Blechstärke, insbesondere nach innen, versetzt ist, so dass die zweiten Abschnitte der Blechformteile bei Überlappung mit der vierten Zunge in einem in ein Erdreich eingebrachten Zustand eine ebene obere Fläche bilden können.

Das Rasenkantenset kann insbesondere eine Anzahl von gleichen erfindungsgemäßen Blechformteilen aufweisen, die z. B. alle eine zweite Zunge aufweisen und in der zweiten Zunge mit z. B. zwei bis vier ersten Laschen, insbesondere mit zwei ersten Laschen, und im Bereich der zweiten Außenkante mit zwei bis vier ersten Durchbrüchen, insbesondere mit zwei ersten Durchbrüchen, versehen sind.

Alternativ kann das Rasenkantenset zumindest ein erfindungsgemäßes erstes Blechformteil und ein erfindungsgemäßes zweites Blechformteil umfassen,

wobei ausschließlich das erste Blechformteil im Bereich der dritten Außenkante eine vierte Zunge und im Bereich der vierten Außenkante eine fünfte Zunge aufweist, welche jeweils durch einen Doppelfalz um eine Blechstärke, insbesondere nach innen, versetzt ist,

wobei die zweiten Abschnitte der ersten Blechformteile mit den zweiten Abschnitten der zweiten Blechformteile bei Überlappung mit der vierten Zunge und/oder der fünften Zunge in einem in ein Erdreich eingebrachten Zustand eine ebene obere Fläche bilden können.

Bei dieser Ausgestaltung ist es auch möglich, dass ausschließlich das erste oder ausschließlich das zweite Blechformteil im Bereich der ersten Außenkante eine zweite Zunge und im Bereich der zweiten Außenkante eine dritte Zunge, z. B. jeweils mit zwei bis vier ersten Laschen, aufweist. Das jeweils andere Blechformteil weist dann im Bereich der ersten und zweiten Außenkante erste Durchbrüche, die in Anzahl, Position und Ausmaß den ersten Laschen in der zweiten und dritten Zunge im ersten oder zweiten Blechformteil entsprechen, auf.

Weiterhin betrifft die Erfindung ein Verfahren zum Setzen von Rasenkanten mit den folgenden Schritten:
a) Bereitstellen eines erfindungsgemäßen Rasenkantensets,
b) Eindrücken eines der Blechformteile in ein Erdreich, so dass der/die durch die aus dem ersten Abschnitt herausgebogene(n) erste(n) Zunge(n) gebildete(n) Vorsprung/Vorsprünge auf dem Erdreich aufliegt/aufliegen,
c) Eindrücken eines weiteren der Blechformteile auf der Seite der dritten Außenkante des bereits im Erdreich befindlichen Blechformteils, so dass eine vierte Außenkante des weiteren Blechformteils auf der vierten Zunge des Blechformteils aufliegt und der/die durch die aus dem ersten Abschnitt des weiteren Blechformteils herausgebogene(n) erste(n) Zunge(n) des weiteren der Blechformteile gebildete(n) Vorsprung/Vorsprünge auf dem Erdreich aufliegt/aufliegen,
d) Wiederholen des Schritts c) bis eine gewünschte Länge einer Rasenbegrenzung erreicht ist.

Mit dem erfindungsgemäßen Verfahren wird eine formschlüssige Rasenkante gesetzt. Wenn die ersten Zungen im Rasenkantenset nicht vorgebogen sind, umfasst das Verfahren auch den Schritt des Herausbiegens der ersten Zungen. Die ersten Zungen begrenzen die Eindrücktiefe der Blechformteile.

Zum Einbringen in ein festeres Erdreich kann vor dem Eindrücken der Rasenkanten ein Schlitz in das Erdreich eingebracht werden.

Das Verfahren kann weiterhin den Schritt des Verbindens der Blechformteile mittels der Verbindungsmittel gemäß der obigen Merkmale ii) und iii) oder sonstiger Verbindungsmittel umfassen.

Insbesondere wenn die Blechformteile erste Laschen und erste Durchbrüche aufweisen, werden die ersten Laschen des einen Blechformteils in die ersten Durchbrüche des benachbarten Blechformteils eingesteckt. Dabei kann die Verbindung zwischen den Blechformteilen bei oder nach dem Eindrücken in das Erdreich hergestellt werden. Bei einer anderen Ausgestaltung des Verfahrens werden die Blechformteile zuerst verbunden und dann im verbundenen Zustand in das Erdreich eingebracht. Dieses Verfahren umfasst die Schritte
a) Bereitstellen eines erfindungsgemäßen Rasenkantensets,
b) Verbinden zumindest zweier der Blechformteile, insbesondere eines der ersten und eines der zweiten Blechformteile,
c) Eindrücken der in Schritt b) verbundenen Blechformteile in ein Erdreich, so dass die durch die aus dem ersten Abschnitt herausgebogenen ersten Zungen gebildeten Vorsprünge auf dem Erdreich aufliegen,
d) Eindrücken weiterer gemäß Schritt b) verbundener Blechformteile auf der Seite der dritten Außenkante der bereits im Erdreich befindlichen verbundenen Blechformteile, so dass eine vierte Außenkante des weiteren verbundenen Blechformteils auf der vierten Zunge aufliegt und die durch die aus dem ersten Abschnitt herausgebogenen ersten Zungen der weiteren Blechformteile gebildeten Vorsprünge auf dem Erdreich aufliegen,
e) Wiederholen des Schritts d) bis eine gewünschte Länge einer Rasenbegrenzung erreicht ist.

Nachfolgend wird die Erfindung anhand von Zeichnungen näher erläutert. Es zeigen:
- Fig. 1: eine erste Ausgestaltung eines erfindungsgemäßen Blechformteils,
- Fig. 2: eine zweite Ausgestaltung eines erfindungsgemäßen Blechformteils,
- Fig. 3: eine dritte Ausgestaltung eines erfindungsgemäßen Blechformteils,
- Fig. 4: eine vierte Ausgestaltung eines erfindungsgemäßen Blechformteils,
- Fig. 5: eine fünfte Ausgestaltung eines erfindungsgemäßen Blechformteils,
- Fig. 6: eine erste Ausgestaltung eines erfindungsgemäßen Rasenkantensets,
- Fig. 7: eine zweite Ausgestaltung eines erfindungsgemäßen Rasenkantensets und
- Fig. 8: eine dritte Ausgestaltung eines erfindungsgemäßen Rasenkantensets.

Bei sämtlichen Figuren ist eine in der perspektivischen Darstellung zum Betrachter weisende abgekantete Faltkante als Doppellinie dargestellt. Bei sämtlichen Figuren, die durchbrochene Linien enthalten, stellen die durchbrochenen Linien Linien unbestimmter Länge dar.

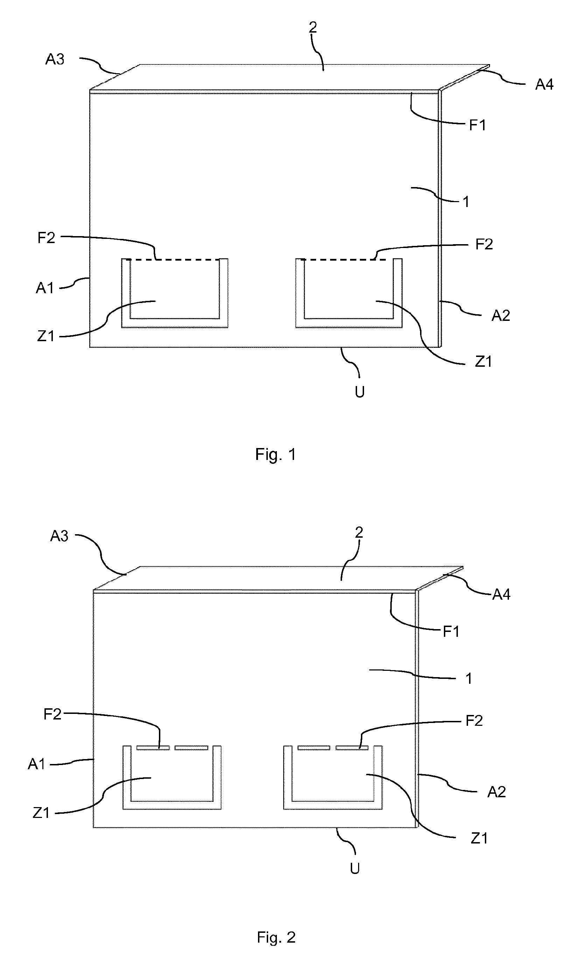

Fig. 1 zeigt ein Blechformteil mit einem ersten Abschnitt 1 und einem zweiten Abschnitt 2, wobei zwischen dem ersten Abschnitt 1 und dem zweiten Abschnitt 2 eine erste Faltkante F1 angeordnet ist. Der erste Abschnitt 1 hat eine erste Außenkante A1 und eine gegenüberliegende zweite Außenkante A2, sowie eine Unterkante U. Der zweite Abschnitt 2 hat eine dritte Außenkante A3 und eine gegenüberliegende vierte Außenkante A4. Im ersten Abschnitt 1 sind zwei erste Zungen Z1 vorgesehen. Die ersten Zungen Z1 sind jeweils über eine auf der Seite der ersten Faltkante F1 angeordnete zweite Faltkante F2 mit dem ersten Abschnitt 1 verbunden, wobei die erste F1 und die zweite Faltkante F2 parallel verlaufen. Die ersten Zungen Z1 erstrecken sich von der ersten Faltkante F1 weg. Die ersten Zungen Z1 sind aus dem ersten Abschnitt 1 ausgestanzt oder ausgeschnitten.

Fig. 2 zeigt eine zweite Ausgestaltung des erfindungsgemäßen Blechformteils, welche sich vom Blechformteil gemäß Fig. 1 dadurch unterscheidet, dass an der zweiten Faltkante F2 Perforationen vorgesehen sind, welche ein manuelles Herausbiegen der ersten Zungen Z1 aus dem ersten Abschnitt 1 erleichtern.

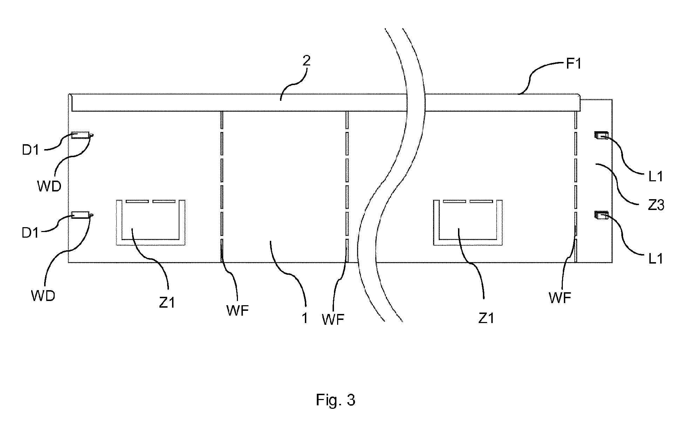

Fig. 3 zeigt eine weitere Ausgestaltung des erfindungsgemäßen Blechformteils. Dabei ist der zweite Abschnitt 2 an der ersten Faltkante F1 vollständig auf den ersten Abschnitt 1 zurückgefaltet. Weiterhin weist das Blechformteil weitere Durchbrüche WD auf, welche zum Einrasten von an ersten Laschen L1 weiterer Blechformteile angeordneten Rastmittel dienen. Darüber hinaus sind weitere Faltkanten WF mit Perforationen vorgesehen, welche ein manuelles Abkanten des Blechformteils entlang der weiteren Faltkante WF erlauben. Dadurch kann das Blechformteil um einen beliebigen Winkel geknickt werden, um bei einer Verwendung als Rasenkante oder Beetbegrenzung eine gewünschte Form der Raseneinfassung oder Beeteinfassung realisieren zu können.

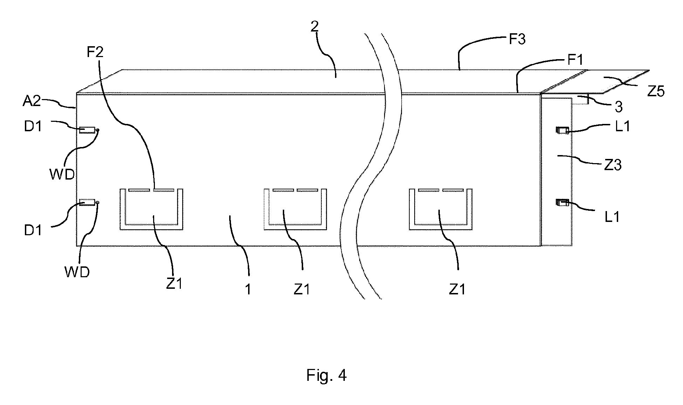

Fig. 4 zeigt eine weitere Ausgestaltung. Das Blechformteil weist einen sich vom zweiten Abschnitt 2 erstreckenden dritten Abschnitt 3 auf, wobei sich zwischen dem zweiten 2 und dem dritten Abschnitt 3 die dritte Faltkante F3 befindet. Im ersten Abschnitt 1 sind drei erste Zungen Z1 angeordnet. Vom ersten Abschnitt 1 erstreckt sich die dritte Zunge Z3 und vom zweiten Abschnitt 2 erstreckt sich die fünfte Zunge Z5 so, dass die dritte Zunge Z3 und die fünfte Zunge Z5 benachbart angeordnet sind. Auf der dritten Zunge Z3 sind hier zwei erste Laschen L1 angeordnet. Auf gleicher Höhe sind im Bereich der zweiten Außenkante A2 erste Durchbrüche D1 angeordnet. Erste Durchbrüche D1 und erste Laschen L1 sind von der Größe und Anordnung her so aufeinander abgestimmt, dass die Laschen L1 in die Durchbrüche D1 eines weiteren gleich ausgestalteten Blechformteils eingreifen können.

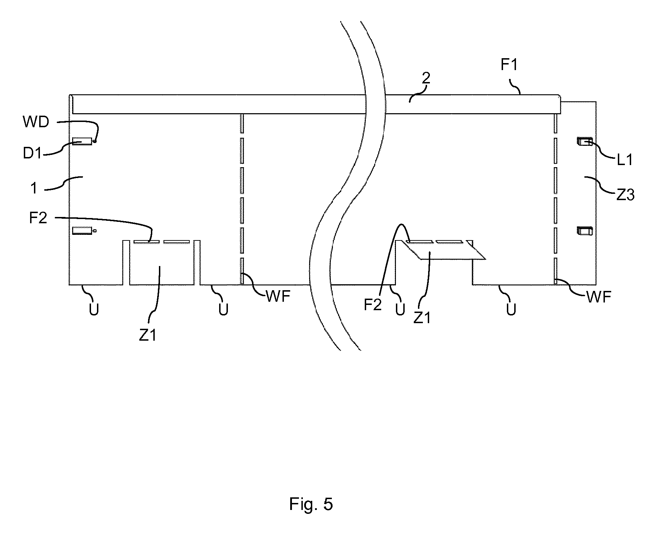

Fig. 5 zeigt eine weitere Ausgestaltung des erfindungsgemäßen Blechformteils, bei welchem die Unterkante U nicht durchgehend ist sondern durch die ersten Zungen Z1 unterbrochen ist. Die linke der beiden dargestellten Zungen Z1 ist dabei noch nicht aus dem ersten Abschnitt 1 herausgebogen, während die rechte der beiden dargestellten Zungen Z1 in einem rechten Winkel aus dem ersten Abschnitt 1 herausgebogen ist. Es ist grundsätzlich bei allen erfindungsgemäßen Blechformteilen möglich, dass die Unterkante U durchgehend verläuft oder durch die herausgebogenen oder herausbiegbaren Zungen unterbrochen ist.

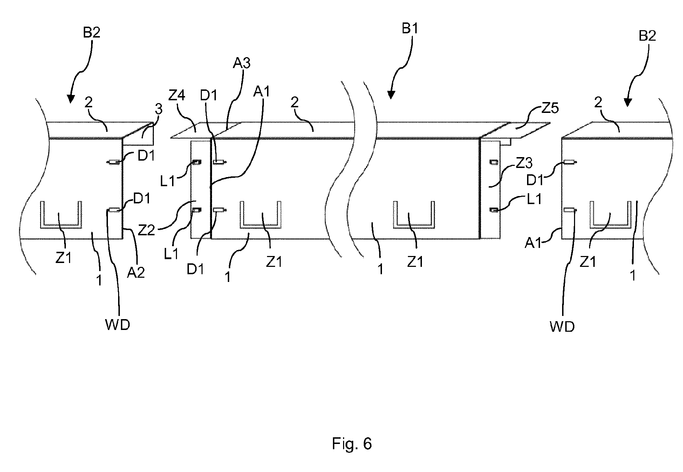

Fig. 6 zeigt ein erfindungsgemäßes Rasenkantenset mit zwei verschiedenen Ausgestaltungen des erfindungsgemäßen Blechformteils, nämlich einem ersten Blechformteil B1 und einem zweiten Blechformteil B2. Das erste Blechformteil B1 weist eine zweite Zunge Z2, eine dritte Zunge Z3, eine vierte Zunge Z4 und eine fünfte Zunge Z5 auf. Die zweite Zunge Z2 und die dritte Zunge Z3 weisen jeweils zwei erste Laschen L1 auf. Jede der zweiten Z2, dritten Z3, vierten Z4 und fünften Zungen Z5 kann durch einen Doppelfalz nach innen versetzt sein.

Das zweite Blechformteil B2 weist keine zweiten Z2, dritten Z3, vierten Z4 und fünften Zungen Z5 auf. Im Bereich der ersten A1 und zweiten A2 Außenkante sind jeweils zwei erste Durchbrüche D1 angeordnet. Das erste Blechformteil B1 kann jeweils mit zwei der zweiten Blechformteile B2 verbunden werden.

Das erste Blechformteil B1 weist außerdem im Bereich seiner ersten Außenkante A1 neben der zweiten Zunge Z2 erste Durchbrüche D1 auf. Diese ersten Durchbrüche D1 erlauben die Erstellung einer rechtwinkligen Eckverbindung. Dazu kann die vierte Zunge Z4 an der dritten Außenkante A3 nach unten und die zweite Zunge Z2 an der ersten Außenkante A1 vom Betrachter aus gesehen im rechten Winkel nach hinten gebogen werden. Ein weiteres erstes Blechformteil B1, bei welchem die zweite Zunge Z2 und die vierte Zunge Z4 ebenso gebogen wurden, kann daran im rechten Winkel so angesetzt werden, dass die ersten Laschen L1 auf dessen im rechten Winkel nach hinten gebogener Zunge Z2 in die ersten Durchbrüche D1 im Bereich der ersten Außenkante A1 des ersten Blechformteils B1 eingreifen und einrasten. Dadurch werden die Rasenkanten in einem rechten Winkel aneinander gesetzt.

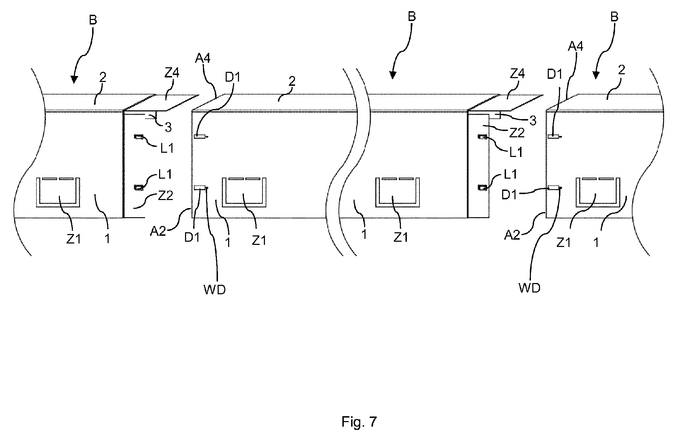

Fig. 7 zeigt ein Rasenkantenset mit identischen Blechformteilen B. Jedes der Blechformteile B weist zumindest zwei erste Zungen Z1 auf. Jedes der Blechformteile B weist weiterhin eine zweite Zunge Z2 mit ersten Laschen L1 und eine vierte Zunge Z4 auf. Die Blechformteile weisen weiterhin einen dritten Abschnitt 3 auf. Die zweite Zunge Z2 und die vierte Zunge Z4 sind insbesondere durch einen Doppelfalz nach innen versetzt. Die Blechformteile B weisen im Bereich der zweiten Außenkante A2 erste Durchbrüche D1 auf. Zwei Blechformteile B werden miteinander verbunden, indem die vierte Zunge Z4 unter die vierte Außenkante A4 und somit unter den zweiten Abschnitt 2 des benachbarten Blechformteils B geschoben wird. Die zweite Zunge Z2 wird in Sichtrichtung hinter die zweite Außenkante A2 des benachbarten Blechformteils B geschoben, so dass sie innen im benachbarten Blechformteil B angeordnet ist. Die ersten Laschen L1 werden in die ersten Durchbrüche D1 des benachbarten Blechformteils B eingesteckt. Die ersten Abschnitte 1 und die zweiten Abschnitte 2 benachbarter Blechformteile B bilden im verbundenen Zustand eine im wesentlichen ebene Flächen.

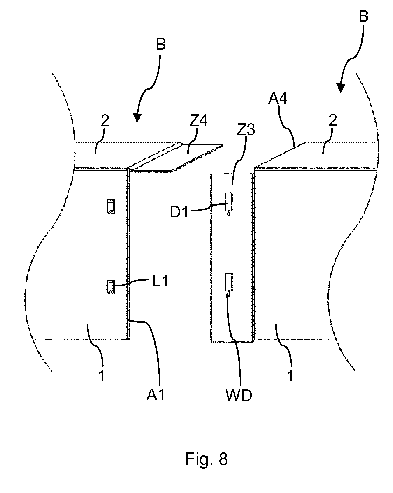

Fig. 8 zeigt zwei Blechformteile B eines Rasenkantensets mit identischen Blechformteilen B. Jedes der Blechformteile B weist zumindest zwei hier nicht dargestellte erste Zungen Z1 auf. Jedes der Blechformteile B weist weiterhin eine dritte Zunge Z3 mit ersten Durchbrüchen D1 und weiteren Durchbrüchen WD sowie eine vierte Zunge Z4 auf. Die vierte Zunge Z4 ist durch einen Doppelfalz nach innen und die dritte Zunge durch einen Doppelfalz nach außen versetzt. Die Blechformteile B weisen im Bereich der ersten Außenkante A1 erste Laschen L1 auf.

Zwei der Blechformteile B werden miteinander verbunden, indem die vierte Zunge Z4 unter die vierte Außenkante A4 und somit unter den zweiten Abschnitt 2 des benachbarten Blechformteils B geschoben wird. Die dritte Zunge Z2 wird in Sichtrichtung vor die erste Außenkante A1 des benachbarten Blechformteils B geschoben, so dass sie außen am benachbarten Blechformteil B angeordnet ist. Die ersten Laschen L1 werden in die ersten Durchbrüche D1 in der dritten Zunge Z3 des benachbarten Blechformteils B eingesteckt.

Die ersten in den Figuren 3 bis 8 dargestellten Laschen L1 können Rastmittel zum Verrasten mit den am Rand der ersten Durchbrüche D1 vorgesehenen weiteren Durchbrüchen WD aufweisen.

### Bezugszeichen

- 1: erster Abschnitt
- 2: zweiter Abschnitt
- 3: dritter Abschnitt
- A1: erste Außenkante
- A2: zweite Außenkante
- A3: dritte Außenkante
- A4: vierte Außenkante
- B: Blechformteil
- B1: erstes Blechformteil
- B2: zweites Blechformteil
- D1: erster Durchbruch
- WD: weiterer Durchbruch
- F1: erste Faltkante
- F2: zweite Faltkante
- F3: dritte Faltkante
- L1: erste Lasche
- Z1: erste Zunge
- Z2: zweite Zunge
- Z3: dritte Zunge
- Z4: vierte Zunge
- Z5: fünfte Zunge
- U: Unterkante
- WF: weitere Faltkante

## Patentansprüche

1. Blechformteil zur Verwendung als Rasenkante oder Beetbegrenzung, wobei das Blechformteil zumindest eine erste Faltkante (F1) aufweist und einstückig aus einem Blechzuschnitt hergestellt ist, wobei die erste Faltkante (F1) zwischen einem ersten (1) und einem zweiten Abschnitt (2) angeordnet und der erste Abschnitt (1) an der ersten Faltkante (F1) abgekantet ist,
wobei im ersten Abschnitt (1) der ersten Faltkante (F1) gegenüberliegend eine Unterkante (U) angeordnet und zumindest eine erste Zunge (Z1) vorgesehen ist, wobei die erste Zunge (Z1) an einer zweiten Faltkante (F2) aus dem ersten Abschnitt (1) herausgebogen werden kann, und im herausgebogenen Zustand einen Vorsprung bildet,
wobei die zweite Faltkante (F2) parallel zur ersten Faltkante (F1) und beabstandet zur Unterkante (U) verläuft.

2. Blechformteil nach Anspruch 1, wobei im ersten Abschnitt (1) eine Mehrzahl der ersten Zungen (Z1) vorgesehen sind, welche jeweils an der zweiten Faltkante (F2) aus dem ersten Abschnitt (1) herausgebogen werden können und im herausgebogenen Zustand jeweils einen Vorsprung bilden, wobei jede der zweiten Faltkanten (F2) parallel zur ersten Faltkante (F1) verläuft und denselben Abstand zur ersten Faltkante (F1) aufweist.

3. Blechformteil nach Anspruch 1 oder 2,
wobei der zweite Abschnitt (2) an der ersten Faltkante (F1) vollständig auf den ersten Abschnitt (1) zurückgefaltet ist oder
wobei das Blechformteil weiterhin einen dritten Abschnitt (3) umfasst, welcher sich vom zweiten Abschnitt erstreckt, wobei eine dritte Faltkante (F3) zwischen dem zweiten (2) und dem dritten Abschnitt (3) angeordnet und der dritte Abschnitt (3) an der dritten Faltkante (F3) abgekantet ist, wobei die zweite Faltkante (F2) und die dritte Faltkante (F3) parallel verlaufen.

4. Blechformteil nach einem der vorhergehenden Ansprüche,
wobei der erste Abschnitt (1) eine erste (A1) und eine gegenüberliegende zweite Außenkante (A2) und der zweite Abschnitt (2) eine dritte (A3) und eine gegenüberliegende vierte Außenkante (A4) aufweist, wobei das Blechformteil im Bereich der ersten (A1), zweiten (A2), dritten (A3) und/oder vierten Außenkante (A4) zur Aufnahme zumindest eines Verbindungsmittels oder als zumindest ein Verbindungsmittel oder Teil eines Verbindungsmittels ausgebildet ist, wobei das Verbindungsmittel ein zum Verbinden mit einem weiteren Blechformteil gemäß diesem oder einem der vorherigen Ansprüche ausgebildetes Verbindungsmittel ist.

5. Blechformteil nach Anspruch 4,
wobei das Verbindungsmittel mindestens ein Verbindungsmittel oder eine Kombination von Verbindungsmitteln aus der folgenden Gruppe ist:
i) eine im Bereich der ersten (A1), zweiten (A2), dritten (A3) und/oder vierten Außenkante (A4) angeordnete zweite (Z2), dritte (Z3), vierten (Z4) und/oder fünfte Zunge (Z5) zum Überlappen mit einem Bereich einer ersten (A1), zweiten (A2), dritten (A3) und/oder vierten Außenkante (A4) eines weiteren Blechformteils gemäß diesem oder einem der vorhergehenden Ansprüche,
ii) mindestens ein erster Durchbruch (D1), welcher in der zweiten (Z2) und/oder dritten Zunge (Z3) oder im ersten Abschnitt (1) im Bereich der ersten (A1) und/oder zweiten Außenkante (A2) angeordnet ist, zum Einstecken einer ersten Lasche eines weiteren Blechformteils gemäß Merkmal iii) dieses Anspruchs und
iii) mindestens eine erste Lasche (L1), welche auf der zweiten (Z2) und/oder dritten Zunge (Z3) oder im ersten Abschnitt (1) im Bereich der ersten (A1) und/oder zweiten Außenkante (A2) angeordnet ist, zum Einstecken in den ersten Durchbruch (D1) eines weiteren Blechformteils gemäß Merkmal ii) dieses Anspruchs.

6. Blechformteil nach Anspruch 5,
wobei die zweite (Z2), dritte (Z3), vierte (Z4) und/oder fünfte Zunge (Z5) durch einen Doppelfalz um eine Blechstärke, insbesondere nach innen, versetzt abgekantet ist, so dass ein weiteres Blechformteil mit gleichem Querschnitt und gleicher Blechstärke formschlüssig damit verbunden werden kann.

7. Blechformteil nach einem der vorhergehenden Ansprüche,
wobei der Blechzuschnitt entlang der ersten (F1), zweiten (F2) und/oder dritten Faltkante (F3) eine Materialverjüngung und/oder Perforation aufweist.

8. Verwendung einer Mehrzahl der Blechformteile nach einem der Ansprüche 1 bis 7 als Rasenkante oder Beetbegrenzung,
wobei die Blechformteile mit einem Teil der ersten Abschnitte (1) in ein Erdreich gesteckt werden, und die durch die ersten Zungen (Z1) gebildeten Vorsprünge eine Eindringtiefe in das Erdreich begrenzen.

9. Verwendung nach Anspruch 8, wobei die Blechformteile nach einem der Ansprüche 4 bis 7 über die Verbindungsmittel miteinander verbunden werden.

10. Rasenkantenset, umfassend zumindest zwei Blechformteile nach einem der Ansprüche 1 bis 7, wobei jedes der Blechformteile im Bereich der dritten Außenkante (A3) eine vierte Zunge (Z4) aufweist, welche durch einen Doppelfalz um eine Blechstärke nach innen versetzt ist, so dass die zweiten Abschnitte (2) der Blechformteile bei Überlappung mit der vierten Zunge (Z4) in einem in ein Erdreich eingebrachten Zustand eine ebene obere Fläche bilden können.

11. Rasenkantenset, umfassend zumindest ein erstes Blechformteil (B1) nach einem der Ansprüche 1 bis 7 und ein zweites Blechformteil (B2) nach einem der Ansprüche 1 bis 7,
wobei ausschließlich das erste Blechformteil (B1) im Bereich der dritten Außenkante (A3) eine vierte Zunge (Z4) und im Bereich der vierten Außenkante (A4) eine fünfte Zunge (Z5) aufweist, welche jeweils durch einen Doppelfalz um eine Blechstärke versetzt ist,
wobei die zweiten Abschnitte (2) der ersten Blechformteile (B1) mit den zweiten Abschnitten (2) der zweiten Blechformteile (B2) bei Überlappung mit der vierten Zunge (Z4) und/oder der fünften Zunge (Z5) in einem in ein Erdreich eingebrachten Zustand eine ebene obere Fläche bilden können.

12. Verfahren zum Setzen von Rasenkanten mit den folgenden Schritten:
a) Bereitstellen eines Rasenkantensets nach Anspruch 10,
b) Eindrücken eines der Blechformteile in ein Erdreich, so dass der/die durch die erste(n) Zunge(n) (Z1) gebildete(n) Vorsprung/Vorsprünge auf dem Erdreich aufliegt/aufliegen,
c) Eindrücken eines weiteren der Blechformteile auf der Seite der dritten Außenkante (A3) des bereits im Erdreich befindlichen Blechformteils, so dass eine vierte Außenkante (A4) des weiteren Blechformteils auf der vierten Zunge (Z4) des Blechformteils aufliegt und der/die durch die erste(n) Zunge(n) (Z1) des weiteren der Blechformteile gebildete(n) Vorsprung/Vorsprünge auf dem Erdreich aufliegt/aufliegen,
d) Wiederholen des Schritts c) bis eine gewünschte Länge einer Rasenbegrenzung erreicht ist.

13. Verfahren nach Anspruch 12, wobei der Schritt c) weiterhin umfasst:
Verbinden der Blechformteile mittels der Verbindungsmittel gemäß der Merkmale ii) und iii) des Anspruchs 5 oder sonstiger Verbindungsmittel.

14. Verfahren zum Setzen von Rasenkanten mit den folgenden Schritten:
a) Bereitstellen eines Rasenkantensets nach Anspruch 10 oder 11,
b) Verbinden zumindest zweier der Blechformteile, insbesondere eines der ersten und eines der zweiten Blechformteile,
c) Eindrücken der in Schritt b) verbundenen Blechformteile in ein Erdreich, so dass die durch die ersten Zungen (Z1) gebildeten Vorsprünge auf dem Erdreich aufliegen,
d) Eindrücken weiterer gemäß Schritt b) verbundener Blechformteile auf der Seite der dritten Außenkante (A3) der bereits im Erdreich befindlichen verbundenen Blechformteile, so dass eine vierte Außenkante (A4) des weiteren verbundenen Blechformteils auf der vierten Zunge (Z4) aufliegt und die durch die ersten Zungen (Z1) der weiteren Blechformteile gebildeten Vorsprünge auf dem Erdreich aufliegen,
e) Wiederholen des Schritts d) bis eine gewünschte Länge einer Rasenbegrenzung erreicht ist.

15. Verfahren nach einem der Ansprüche 12 bis 14,
wobei vor dem Eindrücken der Rasenkanten ein Schlitz in das Erdreich eingebracht wird.
